Europäisches Patentamt

European Patent Office

Office européen des brevets

(19)

(11) **EP 0 922 953 A1**

(12) **EUROPEAN PATENT APPLICATION**

(43) Date of publication:
    **16.06.1999 Bulletin 1999/24**

(51) Int Cl.$^6$: **G01N 21/35**

(21) Application number: **98204075.0**

(22) Date of filing: **02.12.1998**

(84) Designated Contracting States:
    **AT BE CH CY DE DK ES FI FR GB GR IE IT LI LU
    MC NL PT SE**
    Designated Extension States:
    **AL LT LV MK RO SI**

(30) Priority: **09.12.1997 IT MI972718**

(71) Applicant: **AGIP PETROLI S.p.A.**
    **00142 Roma (IT)**

(72) Inventors:
    • **Pavoni, Silvia**
      **20090 Limito di Pioltello-Milan (IT)**

    • **Giacobbe, Silvia**
      **20085 Locate Triulzi-Milan (IT)**
    • **Fornara, Marcello**
      **27039 Sannazzaro de' Burgondi-Pavia (IT)**
    • **Marchesi, Giovanni**
      **20017 Rho-Milan (IT)**

(74) Representative: **De Gregori, Antonella et al**
    **Ing. Barzano & Zanardo Milano S.p.A.**
    **Via Borgonuovo 10**
    **20121 Milano (IT)**

(54) **Process for predicting the cold characteristics of gasoils**

(57)    Process for predicting the cold characteristics of gasoils by a correlation of their near infra red (NIR) spectra with the same characteristics measured experimentally with conventional methods, said correlation being carried out with the help of neural networks optimized with genetic algorithms.

EP 0 922 953 A1

## Description

The present invention relates to a process for predicting the cold characteristics of gasoils, such as Pour Point (PP), Cold Filter Plugging Point (CFPP) and Cloud Point (CP) by a correlation of their near infra red (Near Infra Red, NIR) spectra with the same characteristics measured experimentally with conventional methods.

The term gasoil, as used in the present invention and claims, mainly refers to petroleum refinery products, i.e. deriving from primary distillation processes, desulfurization processes of distillates, thermal and/or catalytic conversion processes of heavier fractions, having a composition ranging from kerosene (hydrocarbons having between 10 and 13 carbon atoms and boiling point within the range of 160-230°C) and medium distillate (hydrocarbons having from 13 to 22 carbon atoms and a boiling point within the range of 230-370°C). Single products or products mixed with each other and semi-processed products coming directly from processing are included in the definition of gasoil.

An important specification constraint for gasoils lies in their cold characteristics, in particular the Pour Point (flow point), the Cloud Point (mist point) and the CFPP (blockage point of the filter at low temperature) which indicate the lowest temperature at which the gasoil is sufficiently fluid to be able to be transferred and used.

The Pour Point is the lowest temperature, expressed in decrements of 3°C, at which the fluid flows while it is cooling. The PP however does not represent the lowest temperature at which the gasoil can be used in an engine.

For this reason, the CFPP test has been introduced, which measures the lowest temperature at which the fluidity of the gasoil still enables a regular flow through the engine filter. The CFPP test, which for most gasoils is about 6°C above the PP, is now generally preferred to the pour point test in the characterization of gasoils.

The Cloud Point, which for a typical gasoil is from 3 to 6°C higher than the PP, is the temperature at which the sample becomes misty or turbid due to paraffin crystals under specific standard test conditions during cooling.

Additives for improving the characteristics at atmospheric temperature of gasoils (flow improvers) are widely used, especially in winter, by most manufacturers for lowering the PP, CFPP and CP temperatures respectively of their products. The necessity for a rapid and reliable method for controlling the quality of gasoils, with or without additives, both in the production phase and/or when leaving the refinery or when inserted in the sales network, is therefore evident.

The Applicant has now found a process capable of predicting the PP, CFPP and CP of gasoils starting from their NIR spectra by the use of neural networks whose architecture has been optimized by resorting to genetic algorithms. The determination of several physicochemical characteristics of gasoils such as density, aniline point, PIONA (paraffins, isoparaffins, olefins, nafthenes, aromatics) as a function of NIR spectra, is known in literature, for example in European patent 305.090 or in published international patent application WO91-15762. These methods however cannot be applied for predicting properties at low temperature.

The present invention therefore relates to a process for predicting the cold characteristics of unknown gasoils within a temperature range of -50 to 17°C which comprises:

a) measuring the NIR spectra of a high number of samples of gasoils coming from different supply sources;

b) selecting a range of wave numbers in the spectral region and converting the wave numbers selected into absorbances as inlet signals for a multivaried statistical analysis (PCA);

c) using the data resulting from the multivaried statistical analysis as inlet neurons for a neural network;

d) determining at least one cold characteristic of the gasoil samples with traditional measurement methods;

e) selecting from the series of data available, from both steps (a)-(c) and step (d), a "training set" for the construction of the architecture of a neural network and the correlation of the absorbance values with the values measured of the characteristic at low temperature, generating a series of prediction data;

f) optimizing the structure/number/type of inlet neurons with genetic algorithms;

g) convalidating the prediction data leaving the neural network by means of the remaining data of steps (a)-(c) and step (d);

h) applying the prediction data thus convalidated to NIR spectra of unkown gasoils for predicting the property at low temperature in question.

In accordance with the present invention, the correlation between the properties at low temperature of gasoils and the corresponding NIR spectra, according to step (a), can be effected with known methods which are described, for example, in published international patent application WO91-15762.

In addition, again in accordance with step (a), it is preferable to operate with a number of samples of gasoils higher than 70, generally between 70 and 100. It is important, for the statistical validity of the model and effectiveness of the predictions of unidentified samples, for the variability range to be conveniently wide (from kerosene to medium distillate comprising mixtures of intermediate products) and for it to cover as diversified a series of products as possible.

The spectral ratio used is between 1100 and 1550 nm.

The spectra are then analyzed, together with the determination of the properties at low temperature with conventional methods, applying multivaried analysis statistical techniques such as, for example, Principal Component Analysis (PCA) for pre-processing the data, Neural Networks for processing the data and Genetic Algorithms for optimizing the architecture of the networks. The optimization of the neural network configuration by means of the genetic algorithm method guarantees an effective exploration strategy of all possible architectures, a result which cannot be easily obtained with arbitrary variations of the systems owing to the high number of variables in question.

Prediction data are then generated for comparison with NIR spectra obtained under the same conditions for gasoils with unkown properties at low temperature.

Principal Component Analysis is a fundamental chemiometry and multivaried analysis method. This method makes it possible to:

- Correlate variables and understand their relevance;
- Visualize objects taking all the variables into account contemporaneously;
- Reduce the dimensions of the data;
- Recognize similar data or different data;
- Look for the principal properties;
- Form data groups;
- Predict properties of the samples.

PCA "extracts" the prevalent and systematical information of the variables which describe the system, in this case the NIR spectral region between 1100 and 1550 nm, expressed in 450 absorbances for each spectrum, which would be difficult to manage, considering that the number of spectra must be at least 70 to enable significant results to be obtained. This can be achieved by a rotation of the experimental space in a space, that of the principal components, constructed so as to be orthogonal and with some properties which are listed hereunder.

The principal components are simply linear combinations of the original variables, but in the direction of maximum variance. The first principal component will therefore be in the direction of maximum data variability, the second will have the maximum residual variance, and so on. The same amount of components as the original variables of the data set, are calculated, until the variance (information) present in the data is exhausted.

PCA consists of a rotation process of the original data defined by a matrix X having a dimension of n x p, effected so that the first new axis is oriented in the direction of maximum data variance, the second is perpendicular to the first and is in the direction of the following maximum data variance, and so on for all the p new axes.

The mathematical procedure consists in calculating the eigenvalues and eigenvectors of the covariance (or correlation) matrix of the data X, i.e. in the diagonalization of the covariance matrix S of X, defined as:

$$\text{diag }(S) = \text{diag } [ \ X_c^T \ X_c / n\text{-}1 ]$$

wherein $X_c$ is the centred data matrix.

The diagonalization of the covariance matrix involves the determination of a diagonal matrix $\Lambda(p,p)$, said matrix of the eigenvalues, whose diagonal elements are eigenvalues $\lambda_m$, in decreasing order, and a matrix of the loadings L(p,M), whose columns are eigenvectors $l_m$ of the covariance matrix, i.e. each column contains the coefficients of the corresponding eigenvector and M is generally less than or equal to p. The eigenvectors are unit vectors in the new space. The axes of the new space (Principal Components, also called factors or eigenvectors) are axes relating to the maximum variance directions, in gradual decreasing order. The covariance matrix can be decomposed into the two matrices L and $L^T$ by means of the single value decomposition technique (SVD) such as:

$$S = L \cdot \Lambda \cdot L^T = \Sigma_p \ \lambda_p \ l_p \ l_p^T$$

It is therefore possible to represent the initial data matrix X in a new orthogonal space, according to the following relation:

T = XL

(n,M) = (n,p) (p,M) wherein L has the function of a rotation matrix and T is called scores matrix. When M (number of significant components) is equal to p (number of variables), the operation consists in a simple rotation of the original data into a new system of coordinates without any modification of the overall information initially contained in the data matrix X.

As the eigenvalues $l_m$ represent the variance associated with each eigenvector (Principal Component), it is generally probable that the smallest eigenvalues are associated with variabilities due to background noise or irrelevant information. In these cases it is possible to eliminate this part of the data variability by considering only a number M of components less than p. This aspect of the PCA is absolutely fundamental and many methods have been proposed for determining the number M of significant principal components.

The enclosed figure graphically illustrates, as an example, for a tridimensional case, the rotation of the data in the space of the first two principal components. In the case to which the invention refers, the PCA is applied to the whole set of NIR data available, so as to obtain a number of principal components which account for at least 90% of the variance of the system. This number is generally between 6 and 12, depending on the complexity of the information, a number which is much less than the 450 values of the non-transformed spectrum.

Neural networks, an implementation of neurocalculation systems, were initially developed by neurobiologists as computer models of neural systems in the brain.

They are mathematical systems consisting of a certain number of simple process elements or units or neurons which are linked by different "force" or "weight" interconnections.

A neuron mainly consists of an equation, often called "transfer function". The neuron takes the signals weighed by other neurons, adds them up, transforms them and produces a numerical result.

Process units are often compared to real neurons and as their interconnections are "netted", the term "neural network" was invented for the system.

Many neural networks have process elements organized in distinct layers and effect synchronous transfer functions. Almost all neural networks have neurons which receive data and neurons which produce output(s).

The behaviour of the neural networks, the way of collecting and processing data and producing the answer, is mainly influenced by the transfer functions of the neurons, the type of interconnections and their weights.

Generally an architecture or neural network structure is established and different algorithms are used to determine the variations in the weights of the interconnections in order to maximize the accuracy of the answer provided.

The neural networks are trained by showing representative input-output examples. By adapting the weights and functions which connect their own neurons, the network "learns", after an adequate number of presentations, the desired input-output relation.

Once this relation has been established (the neural network has been trained), new inputs can be presented to the network to be able to provide predictions.

A very common architecture of neural networks is back propagation (Back Propagation Neural Network, BPNN). BPNN are networks of the Multilayer Feed Forward type which have a layered architecture where the layers flow in one layer, through one or more hidden layers and at the outlet to an output layer. The data move in a single direction (Feed Forward) through multilayers.

Back Propagation is an instructive algorithm used for determining the contributions of each neuron in the network (weights). The error between the reply of the neural network and the expected reply is "back propagated" through the network (Back Propagation) to determine the new weight values. This takes place several times for each datum of the training set, until the error has reached a stable minimum value.

The frequency of the use of BPNN derives from their good performance on a wide range of applications, for example function modelling, classification, diagnostics and some types of temporal series.

Other types of neural architectures used are Generalized Regression Neural Networks (GRNN). These are four-layered neural networks which memorize the training set, input and output, in the network itself. After storing these, upon the presentation of a new set of data, the BRNN analize the difference between the current data and all the data memorized, obtaining an interpolation and generating an estimated input, based on the information stored in the network. Unlike BP which try to create a mathematical formula which provides answers based on the inlet data, BRNN give an interpolation estimate in its previous experience.

The genetic algorithm theory is relatively new: the first international conference on genetic algorithms was only held in 1985, the first general text on the matter was only published in 1989.

Genetic algorithms are among the so-called simulated evolution methods, i.e. resolution methods of problems which simulate a natural evolution process.

The mechanisms of this type of resolution of problems can be summarized as follows: each simulated evolution process consists of general evolution components such as a population consisting of artificial beings, competition among these beings, reproduction to create new beings which replace those which have reached the end of their "life-time", almost casual variations which lead to better adapted beings, etc.

The artificial beings in this simulated evolution process are possible solutions to a complex problem codified on the computer. Without any knowledge of the problem a priori, the solutions are initially arbitrary. They are updated however step by step by the procedures in the process mentioned above. These procedures are guided by a principal procedure which acts as an arbitrator, which judges the quality of the proposed solutions and, as such, plays the role of an artificial environment in which some can survive and others not. At the same time, the interrelation between all these components obviously leads to gradual improvements which can finally culminate in a solution to the problem.

It is often convenient to represent a possible solution as a vector, or string, of which each element is a value of the corresponding parameter of the problem.

In genetic algorithms, the representation as a string of the possible solution is called "chromosome" or "genotype", by analogy with biology. The combination of all the possible solutions forms the problem space. In estimating the parameters, a series of bits encodes a value of a parameter, according to a binary numeration or, in other cases, each bit gives yes/no information on the result of a problem.

In the resolution phase, which takes place with a step-by-step strategy, where each step is represented by a generation of individuals, the optimization can be represented as a cloud of points which follow separate research paths on the survey space to find the best one.

Intuitively, carrying out numerous parallel types of research is a stronger strategy. In addition, it can be theoretically proved that genetic algorithms are extremely efficient, as the information processed along a research path is significantly used along other research paths as an indication.

When the parameter values of the problem obtained after decoding the string, are passed to the objective function, this calculates a fitness value (predicted quality of the model) which is associated with the string by means of a "merit classification". The research strategy uses a classification of fitness values to encourage competition between the strings for reproduction (duplication), followed by semicasual variations. This updating is carried out periodically, while the population evolves dynamically, generation after generation, similarly to what occurs in nature. The final aim is the dissemination of the improved genetic code, or information, in natural or artificial surroundings.

A population of individuals, each at the beginning with a random chromosome, is evaluated according to how well the set of parameters (decoded by the bit string) resolves the problem. The best members of the population "reproduce" by exchanging genetic information and thus create a new population which is in turn evaluated, reproduces and so on. A low level of genetic mutation is often introduced into the chromosomes to ensure that the research adequately covers the survey space.

Although the applications of genetic algorithms range within a wide variety of sciences, most of the important applications can be grouped into one of the following three categories of problems:

    I. Estimation of numerical parameters
    II. Sequences
    III. Selection of subsets.

Group I comprises aspects linked, among others, to the optimization of the architecture of the neural networks, where the dimension of the population is given by the number of chromosomes and the chromosomes represent the input variables used and the neural network structures. For example, a problem which consists in finding the best combination of 20 inputs and up to 15 knots in a BPNN is a combinatorial problem with over 16 million permutations, which would require vast resources of time and calculating capacity for a computer. With the help of genetic algorithms 1500 combinations could be sufficient (0.009% of the possible total configurations), which can be further reduced with the insertion of appropriate constraints.

Having thus obtained, on the basis of the methods described above, a limited number of independent variables, the data set is completed, for example, with CFPP and CP analysis (dependent variable) corresponding to each spectral sample.

A training set and a validation set for the neural networks are selected from the data set thus obtained, so as to cover, in the first case, all the variability range in the generation and optimization phase of the neural network architecture and, in the second case, to be able to verify the predictive effectiveness of the neural network previously constructed.

The architecture is generally of the three-layered, Back Propagation type, with the same number of input knots as principal components, a "hidden" layer with 16 max knots, an output layer with the same number of knots as the answers, in this case 2, CFPP and CP.

When the network has "learnt" the correct relation between the principal components of the NIR spectrum absorbances and the CFPP and CP values and has been convalidated, the method can be applied to the prediction of an unkown gas oil.

The NIR spectrum of the gas oil sample is then determined, the principal components which form the input for the neural networks constructed as described above, are calculated from the absorbances of this spectrum, the reply values are obtained from the calculation neural algorithm.

The reply of the method can be improved by enriching the database used for constructing the network, which must be "retrained".

An illustrative but non-limiting example of CFPP and CP prediction for gas oils is provided hereunder.

EXAMPLE

A data set of 76 refinery gas oils is taken, the NIR spectrum is measured within the range of 1100 and 1550 nm and the CFPP (IP 309/83 method) and CP (ASTM D5772/95 method) calculated.

The NIR spectrum is treated as described above, obtaining with PCA 8 principal components, sufficient to describe the system.

The training set consists of 50% of these data and the internal convalidation set the remaining 50%.

The optimization of the configuration of the neural network evolves from a population of 40 individuals which are duplicated for 40 generations and are optimized on the basis of an absolute error.

The optimized neural network is of the BPNN type (8, 10, 2).

After applying the method described above, an average absolute prediction error of 3.3°C is obtained for CFPP ($R^2$ in prediction equal to 0.74) and 1.5°C for CP ($R^2$ in prediction equal to 0.93).

**Claims**

1.    A process for the prediction of the cold characteristics of unknown gasoils within a temperature range of -50 to 17°C which comprises:

a) measuring the NIR spectra of a high number of samples of gasoils coming from different supply sources;

b) selecting a range of wave numbers in the spectral region and converting the wave numbers selected into absorbances as inlet signals for a multivaried statistical analysis;

c) using the data resulting from the multivaried statistical analysis as inlet neurons for a neural network;

d) determining at least one characteristic at low temperature of the gasoil samples with trad2-tional measurement methods;

e) selecting from the series of data available, from both steps (a)-(c) and step (d), a "training set" for the construction of the architecture of a neural network and the correlation of the absorbance values with the values measured of the characteristic at low temperature, generating a series of prediction data;

f) optimizing the structure/number/type of inlet neurons with genetic algorithms;

g) convalidating the prediction data leaving the neural network by means of the remaining data of steps (a)-(c) and step (d);

h) applying the prediction data thus convalidated to NIR spectra of unkown gasoils for predicting the property at atmospheric temperature in question.

2. The process according to claim 1, wherein the number of gasoil samples is higher than 70, generally between 70 and 100.

3. The process according to claim 1 or 2, wherein the spectral region used in step (a) is between 1100 and 1550 nm.

EP 0 922 953 A1

European Patent
Office

**EUROPEAN SEARCH REPORT**

Application Number

EP 98 20 4075

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | WO 97 14951 A (SHELL) 24 April 1997<br>* page 7, line 16 - page 8, line 2 *<br>* page 9, line 3 - page 10, line 10 *<br>* page 11, line 5 - line 8 * | 1-3 | G01N21/35 |
| Y | G.F. MILLER et al: 'Designing neural networks using genetic algorithms'. PROCEEDINGS THIRD INTERNATIONAL CONFERENCEON GENETIC ALGORITHMS, Arlington, VA, US, 4-7 June 1989, pages 379-384<br>XP000236333<br>* abstract * | 1-3 | |
| A | WO 94 08226 A (SHELL CANADA) 14 April 1994<br>* page 2, line 13 - line 20 *<br>* page 3, line 1 - line 8 *<br>* page 3, line 25 - line 29 *<br>* page 5, line 15 - line 35 *<br>* figure 1 * | 1 | |
| A | US 5 572 030 A (RANSON) 5 November 1996<br>* column 5, line 19 - column 6, line 59 * | 1 | TECHNICAL FIELDS SEARCHED (Int.Cl.6)<br><br>G01N |

The present search report has been drawn up for all claims

| Place of search | Date of completion of the search | Examiner |
|---|---|---|
| THE HAGUE | 18 March 1999 | Thomas, R.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

7

**ANNEX TO THE EUROPEAN SEARCH REPORT
ON EUROPEAN PATENT APPLICATION NO.**

EP 98 20 4075

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-1999

| Patent document cited in search report | | Publication date | Patent family member(s) | | | Publication date |
|---|---|---|---|---|---|---|
| WO 9714951 | A | 24-04-1997 | AU | 694894 | B | 30-07-1998 |
| | | | AU | 7297996 | A | 07-05-1997 |
| | | | CZ | 9801047 | A | 15-07-1998 |
| | | | EP | 0856154 | A | 05-08-1998 |
| WO 9408226 | A | 14-04-1994 | AU | 676854 | B | 27-03-1997 |
| | | | AU | 5149393 | A | 26-04-1994 |
| | | | EP | 0663998 | A | 26-07-1995 |
| | | | FI | 951570 | A | 03-04-1995 |
| | | | JP | 8501878 | T | 27-02-1996 |
| | | | NO | 951284 | A | 03-04-1995 |
| | | | NZ | 256675 | A | 27-11-1995 |
| | | | ZA | 9307297 | A | 25-04-1994 |
| | | | AU | 5971994 | A | 15-08-1994 |
| | | | BR | 9405871 | A | 12-12-1995 |
| | | | CA | 2154786 | A | 04-08-1994 |
| | | | CN | 1116878 | A | 14-02-1996 |
| | | | WO | 9417391 | A | 04-08-1994 |
| | | | EP | 0681693 | A | 15-11-1995 |
| | | | FI | 953579 | A | 26-07-1995 |
| | | | JP | 8505944 | T | 25-06-1996 |
| | | | NO | 952957 | A | 26-07-1995 |
| | | | NZ | 261119 | A | 22-08-1997 |
| | | | ZA | 9400536 | A | 09-09-1994 |
| US 5572030 | A | 05-11-1996 | CA | 2175326 | A | 30-10-1997 |
| | | | DE | 19617917 | A | 13-11-1997 |
| | | | GB | 2312741 | A | 05-11-1997 |
| | | | JP | 9305567 | A | 28-11-1997 |
| | | | NL | 1003058 | C | 10-11-1997 |

EPO FORM P0459

For more details about this annex : see Official Journal of the European Patent Office, No. 12/82